Europäisches Patentamt

European Patent Office

Office européen des brevets

(19)

(11) Numéro de publication : **0 490 859 A1**

(12) **DEMANDE DE BREVET EUROPEEN**

(21) Numéro de dépôt : 91870195.4

(22) Date de dépôt : 04.12.91

(51) Int. Cl.⁵ : **C05F 3/00, C02F 11/12**

(30) Priorité : **05.12.90 BE 9001156**

(43) Date de publication de la demande :
**17.06.92 Bulletin 92/25**

(84) Etats contractants désignés :
**BE DE FR IT NL**

(71) Demandeur : **TREATMENT TECHNIQUES FOR SLUDGES N.V.**
**Lange Nieuwstraat 21-23, Bus 6**
**B-2000 Antwerpen (BE)**

(71) Demandeur : **AVEVE N.V.**
**Minderbroederstraat 6**
**B-3000 Leuven (BE)**

(72) Inventeur : **Goemaere Inge**
**Brugstraat 37**
**B-9270 Kalken (BE)**
Inventeur : **De Schrijver Paul**
**Neerstraat 125**
**B-3150 Wespelaar (BE)**

(74) Mandataire : **Pieraerts, Jacques et al**
**Bureau Gevers S.A. rue de Livourne 7 bte 1**
**B-1050 Bruxelles (BE)**

(54) **Procédé pour transformer du purin en un produit solide.**

(57) L'invention concerne un procédé pour transformer du purin en un produit solide, suivant lequel ce purin est égoutté. Avant d'égoutter le purin, celui-ci est mélangé à de la matière en provenance du sol et ayant un grain fin, en particulier des matériaux de dragage. De préférence, on ajoute également au purin un floculant.

EP 0 490 859 A1

L'invention concerne un procédé pour transformer du purin en un produit solide suivant lequel le purin est égoutté.

Dans l'élevage de bétail actuel, qui est de moins en moins lié à la terre, le problème se pose qu'en certaines parties du pays il existe de grandes concentrations de bétail, ce qui a pour conséquence de mener à de grands excédents de purin dans ces régions. Lorsque ces excédents de purin ne sont pas éparpillés sur de grandes surfaces mais, par contre, sont déversés sur place, ceci mène à de fortes pollutions du sol et des eaux souterraines ainsi qu'à une pollution de l'air. Les excédents d'excrément, en particulier sous forme de purin, doivent donc être transportés dans des régions plus éloignées. Puisque le purin ne comporte qu'une petite partie de matière sèche, en moyenne 3 à 10 %, ce qui signifie qu'il comporte beaucoup d'eau, le transport de purin est relativement cher.

Afin de réduire les frais de transport de purin, on presse le purin suivant un procédé général connu pour obtenir un taux de matière sèche plus élevé. Un tel procédé est par exemple décrit dans le brevet US-A-1.576.423. Suivant ce procédé connu, le purin est pressé afin d'obtenir un taux de matière sèche d'à peu près 43 % et il est ensuite encore éventuellement mélangé avec de la tourbe, du sable ou de la terre.

Un problème qui se pose lors de l'application du procédé connu est que le purin ne peut que difficilement être égoutté par pressage puisque des difficultés techniques tels que des problèmes d'obturation se posent lors du pressage. De plus, ce procédé connu a le désavantage qu'en égouttant le purin une grande partie des substances nutritives du purin parvient dans l'eau de pressage, ce qui, d'une part, diminue sensiblement la valeur en tant qu'engrais du purin et, d'autre part, même à des eaux d'évacuation fortement polluées qui sont alors difficiles à épurer.

L'invention a dès lors pour but de prescrire un procédé qui permet d'égoutter d'une façon relativement facile le purin et, de plus, par lequel moins de substances servant d'engrais et à l'amélioration du sol sont perdus.

A cette fin, on mélange, avant d'égoutter le purin, ce dernier à de la matière en provenance du sol et ayant un grain fin, en particulier des matériaux de dragage. On a constaté que ce mélange de purin et de matières en provenance du sol peut plus facilement être égoutté que du purin en tant que tel et que de plus la matière en provenance du sol qui y a été ajoutée absorbe une partie des substances organiques et inorganiques du purin.

Un autre avantage du procédé suivant l'invention est que ce procédé offre un débouché supplémentaire pour les matériaux de dragage et fait ainsi sensiblement augmenter la valeur des matériaux des dragage ainsi traités. Le produit obtenu peut en effet, par exemple, être appliqué en tant qu'améliorateur du sol ou en tant que support pour des engrais.

Suivant une forme d'application particulière du procédé suivant l'invention, on ajoute également au purin un floculant afin d'améliorer davantage les facultés d'égouttement du mélange de purin et de matières en provenance du sol. En tant que floculant, on peut utiliser des floculant minéraux tels que du chlorure de calcium, du chlorure de fer (III) et du chlorure de magnésium, mais de préférence on utilise des polyélectrolytes, tels que des polyélectrolytes cationiques CF 502, CF 802 et CL 903 et des polyélectrolytes anioniques tels que AF 700 et AF 400 ou un mélange de ceux-ci. Les polyélectrolytes offrent l'avantage que seulement de petites quantités, de préférence 0,8 à 6 gr de polyélecytrolyte par kilo de matière sèche du mélange de purin et de matières en provenance du sol, doivent être ajoutées, ce qui diminuera le coût final lors de l'usage de polyélectrolyte que lors de l'usage de floculants minéraux.

Suivant une forme de réalisation du procédé suivant l'invention, on ajoute au mélange égoutté de purin et de matière en provenance du sol un engrais chimique et/ou un engrais organique, ce qui augmentera la valeur d'engrais du produit ainsi obtenu et permettra d'utiliser ce dernier produit en tant qu'engrais.

D'autres particularités et avantages de l'invention apparaîtront de la description donnée ci-dessous d'un procédé pour transformer du purin en un produit solide suivant l'invention. La description est uniquement donnée à titre d'exemple et ne limite pas la portée de l'invention.

En général, l'invention se rapporte à un procédé pour transformer du purin en un produit solide en égouttant ce purin. Afin de faciliter l'égouttement du purin, l'invention prévoit que l'on mélange à ce dernier d'abord de la matière en provenance du sol ayant un grain fin, en particulier des matériaux de dragage. La matière en provenance du sol qui a été ajoutée, apporte de plus une contribution lors de l'égouttage pour retenir des particules en suspension et dissoutes dans le purin, de telle manière que la valeur en tant qu'engrais du produit égoutté augmente et que les eaux usées qui restent sont moins fortement polluées et peuvent donc plus facilement être épurées.

Des matériaux de dragage ou les boues de dragage sont essentiellement constitués de fractions de glaise et d'argile ayant un grain fin et d'une quantité réduite de matière organique. Les petites particules présentes dans les boues de dragage sont pour la plupart inférieures à 63 $\mu$. Les boues de dragage en tant que telles forment une matière peu noble qui, en général, est déversée sur des sols situées à bas niveau ou en mer. Le taux de matière sèche de ces matériaux de dragage peut fortement varier en fonction du degré de consolidation. Puisque le produit obtenu par application du procédé suivant l'invention est destiné à être appliqué en tant que substance pour améliorer le sol et/ou en tant qu'engrais, il sera clair que seules des boues de dragage qui sont pures ou épurées peuvent être prises en considération. Dans le procédé suivant l'invention, on mélange par kilo de purin de 0,5 à 4 kg et, en particulier, de 2 à 3 kg de matériaux de dragage ou un autre matériau en provenance du sol et ayant un grain fin au purin. Entre ces frontières, on obtient une amélioration de la faculté d'égouttage du purin sans que dans le produit égoutté ainsi obtenu la matière en provenance du sol forme une trop grande charge et augmenterait sensiblement les frais de transport.

Suivant une forme de réalisation préférentielle, on ajoute également un floculant au purin. En premier lieu, on peut utiliser des floculants minéraux, tels que du chlorure de calcium ($CaCl_2$), du chlorure de fer ($FeCl_3$) et du chlorure de magnésium ($MgCl_2$). Des expériences ont démontré que parmi ces floculants minéraux $FeCl_3$ était le meilleur mais qu'il fallait ajouter à peu près 50 gr par kilo de matière sèche dans le mélange de purin et de matière en provenance du sol pour obtenir une bonne amélioration des facultés d'égouttage.

Suivant un procédé suivant l'invention, on utilise de préférence en tant que floculant un polyélectrolyte cationique, tel que CF 502, CF 802 et CL 903, un polyélectrolyte anionique, tel que AF 700 et AF 400 ou un mélange de ceux-ci.

Des expériences ont démontré qu'en ajoutant de 0,8 à 6 gr de polyélectrolyte par kilo de matière sèche dans le mélange de purin et de matière en provenance du sol, on atteignait déjà le but et que ceci est sensiblement moins cher que d'y ajouter de grandes quantités de floculants minéraux.

Le procédé décrit ci-dessus permet de presser d'une façon simple le purin, mélangé à de la matière en provenance du sol, par exemple en utilisant une presse à tamis sur bande continue pour ainsi presser le mélange afin d'obtenir un pourcentage de matière sèche d'au moins 40 %. En utilisant, par exemple, un filtre-presse à chambres, on peut en pressant obtenir même un taux de matière sèche de 60 % ou plus. Avec un taux de matière sèche de 40 %, on obtient déjà un produit solidifié. Un tel produit solidifié peut, par exemple, être appliqué en gros en tant que substance pour améliorer le sol.

Afin d'augmenter encore la valeur du produit égoutté, on peut, après le pressage, le faire sécher davantage en utilisant par exemple de l'air chaud pour obtenir un taux de matière sèche situé entre par exemple 70 et 90 % et je produit séché peut éventuellement être transformé en poudre, en granulés ou en grains.

Le produit de base obtenu peut également être transformé davantage en y ajoutant des engrais chimiques, tels que par exemple du nitrate d'ammonium, de la chaux et/ou des engrais organiques, tels que de la corne torréfiée, du sang coagulé, guano, etc. jusqu'à une certaine concentration d'azote, de phosphore et de calcium.

Le produit final peut éventuellement être converti en compost, ou bien il sera mélangé avec certains micro-organismes tels que des micro-organismes qui stimulent la transformation en compost et/ou des micro-organismes qui sont utiles pour le sol.

Il sera clair qu'à la description donnée ci-dessus à titre d'exemple d'un procédé suivant l'invention, beaucoup d'autres transformations peuvent être apportées sans pour autant quitter le cadre de l'invention.

**Revendications**

1. Procédé pour transformer du purin en un produit solide suivant lequel ce purin est égoutté, caractérisé en ce qu'avant d'égoutter le purin, celui-ci est mélangé à de la matière en provenance du sol et ayant un grain fin, en particulier des matériaux de dragage.

2. Procédé suivant la revendication 1, caractérisé en ce que par kilo de purin, on mélange de 0,5 à 4 kg, et de préférence de 2 à 3 kg, de ladite matière en provenance du sol avec le purin.

3. Procédé suivant la revendication 1 ou 2, caractérisé en ce qu'on ajoute également un floculant au purin.

4. Procédé suivant la revendication 3, caractérisé en ce qu'en tant que floculant, on utilise un polyéelctrolyte, en particulier d'au moins un des polyélectrolytes cationiques CF 502, CF 802, CL 903 ou des polyélectyrolytes anioniques AF 700 et AF 400.

5. Procédé suivant la revendication 4, caractérisé en ce que par kilo de matière sèche, on ajoute dans le mélange de purin et de matière en provenance du sol de 0,8 à 6 kg de polyélectrolyte.

6. Procédé suivant l'une des revendications 1 à 5, caractérisé en ce que le mélange de purin et de matière en provenance du sol est égoutté en le pressant jusqu'à un taux de matière sèche d'au moins 40 %.

7. Procédé suivant l'une des revendications 1 à 6, caractérisé en ce qu'on ajoute au mélange égoutté de purin et de matière en provenance du sol un engrais chimique et/ou un engrais organique.

8. Procédé suivant l'une des revendications 1 à 7, caractérisé en ce qu'on ajoute au mélange égoutté de purin et de matière en provenance du sol des micro-organismes et qu'on convertit ce mélange égoutté en compost.

9. Procédé suivant l'une des revendications 1 à 8, caractérisé en ce qu'on laisse sécher davantage le mélange égoutté de purin et de matière en provenance du sol et qu'on le transforme en poudres, granulés ou grains.

Office européen
des brevets

**RAPPORT DE RECHERCHE EUROPEENNE**

Numero de la demande

EP 91 87 0195

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-0 201 722 (M. SPITZ) | 1,2,7,9 | C05F3/00 |
| Y | * colonne 3, ligne 42 - ligne 45; revendications * | 6 | C02F11/12 |
| | --- | | |
| X | DE-A-3 815 424 (G. HEINZE) | 1,2,7,9 | |
| | * colonne 2, ligne 47 - ligne 53; revendications * | | |
| | --- | | |
| A | GB-A-2 134 508 (BLUE CIRCLE INDUSTRIES PLC) | 1-6 | |
| | * page 2, ligne 32 - ligne 36; revendications * | | |
| | --- | | |
| A | FR-A-2 267 141 (EBARA INFILCO KABUSHIKI KAISHA) | 1-6 | |
| | * page 10, ligne 10 - ligne 20; revendications * | | |
| | --- | | |
| A | GB-A-2 092 121 (PERMUTIT -BOBY LIMITED) | 1-6 | |
| | * page 2, ligne 38 - ligne 101; revendications * | | |
| | --- | | |
| A | GB-A-1 183 225 (SIMONACCO LIMITED) | 1-6 | |
| | * page 1, ligne 11 - ligne 20; revendications * | | |
| | * page 1, ligne 68 - page 2, ligne 53 * | | |
| | --- | | **DOMAINES TECHNIQUES RECHERCHES (Int. Cl.5 )** |
| A | WO-A-9 009 222 (GOLCONDA ENGINEERING & MINING SERVICES PTY. LTD.) | 1-6 | |
| | * page 14, ligne 1 - ligne 11; revendications * | | C05F |
| | --- | | C02F |
| Y | GB-A-1 582 017 (TATABANYAI SZENBANYAK) | 6 | C05D |
| | * revendications * | | |
| | --- | | |
| A | DE-A-1 592 758 (K. SPONSEL) | 8 | |
| | * page 6 - page 7; revendications * | | |
| | --- | | |
| A | US-A-4 539 121 (M.A. KAPLAND ET AL.) | 1 | |
| | * colonne 2, ligne 7 - colonne 3, ligne 11 * | | |
| | --- | | |
| A | DE-B-2 450 057 (MOHR & FEDERHAFF AG) | | |
| | ----- | | |

Le présent rapport a été établi pour toutes les revendications

| Lieu de la recherche | Date d'achèvement de la recherche | Examinateur |
|---|---|---|
| LA HAYE | 18 MARS 1992 | SCHUT R.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)